# EUROPÄISCHE PATENTSCHRIFT

(11) **EP 4 104 265 B1**
(45) Veröffentlichungstag und Bekanntmachung des Hinweises auf die Patenterteilung: **17.09.2025**
(21) Anmeldenummer: 21704494.0
(22) Anmeldetag: 09.02.2021
(51) Int. Cl.: H02G 3/04, H02G 3/06

(54) **KABELRINNENSYSTEM**
CABLE TROUGH SYSTEM
SYSTÈME DE CHEMIN DE CÂBLE

(30) Priorität: 10.02.2020 DE 102020103309
(43) Veröffentlichungstag der Anmeldung: 21.12.2022
(73) Patentinhaber: Niedax GmbH & Co. KG, 53545 Linz/Rhein (DE)
(72) Erfinder: KLOFT, Martin, 53545 Linz am Rhein (DE); TIPMANN, Andreas, 53545 Linz am Rhein (DE)
(74) Vertreter: KBN IP Patentanwälte Partnerschaft mbB
(86) Internationale Anmeldenummer: PCT/EP2021/053022
(87) Internationale Veröffentlichungsnummer: WO 2021/160581

(56) Entgegenhaltungen:
- WO-A2-2013/015755
- WO-A2-2015/053643
- BE-A3- 1 020 759
- DE-A1- 19 841 643
- DE-U1- 202008 009 852
- ES-A1- 2 354 556
- RU-U1- 187 594

## Beschreibung

Die Erfindung betrifft ein Kabelrinnensystem mit zwei oder mehreren Kabelrinnensegmenten nach dem Oberbegriff des Anspruchs 1. Insbesondere betrifft die Erfindung ein Kabelrinnensystem mit zwei oder mehreren Kabelrinnensegmenten, wobei die Kabelrinnensegmente jeweils eine Kabelrinnenunterseite und zwei die Kabelrinnenunterseite seitlich begrenzende Kabelrinnenseitenwangen aufweisen, die einen im Wesentlichen U-förmigen Querschnitt bilden. Die Kabelrinnensegmente sind dabei eingerichtet, dass zwei Kabelrinnensegmente überlappend miteinander verbunden werden können und hierfür an einem Ende des einen Kabelrinnensegments ein Verbindungsabschnitt vorgesehen ist und ein Ende eines anderen Kabelrinnensegments in oder auf diesem Verbindungsabschnitt mit komplementären mechanischen Verbindungselementen durch eine Klemm- bzw. Rastverbindung verbindbar ist. Die Kabelrinnensegmente sind bevorzugt aus Blech gefertigt.

Kabelrinnensysteme der gattungsgemäßen Art sind aus dem Stand der Technik bekannt und dienen der Lagerung und Führung von Kabeln und Leitungen. Die Kabelrinnensysteme werden, je nach Anwendung, aus geraden, gekrümmten und/oder rampenförmigen Kabelrinnensegmenten zusammengesetzt. Die einzelnen Kabelrinnensegmente werden bei den bekannten Systemen meist verschraubt und/oder durch Führungen hintergreifende Haltelaschen miteinander verbunden. Ein gattungsgemäßes Kabelrinnensystem, welches zum Verbinden zweier Kabelrinnensegmente eine Rast- bzw. Klemmverbindung in Verbindung mit einer hintergreifenden Haltelasche aufweist beschreibt die Offenlegungsschrift WO 2013/ 015 755 A2. Die Offenlegungsschriften DE 198 41 643 A1 und BE 1 020 759 A3 beschreiben ebenfalls gattungsgemäße Kabelrinnensysteme.

In der Regel wird zwischen zwei Arten von Kabelrinnensystemen unterschieden. Einerseits solche, bei denen die Kabelrinnensegmente aus Drahtgitter aufgebaut sind und andererseits solche, die aus Blech gefertigt sind. Als Material wird in der Regel ein Metall, insbesondere Stahl, verwendet. Die Kabelrinnensegmente werden dann, abhängig von ihrem geplanten Einsatz, noch aus Korrosionsschutzgründen feuerverzinkt oder pulverbeschichtet. Die vorliegende Erfindung betrifft insbesondere Kabelrinnensegmente aus perforiertem Blech.

Ein Nachteil der bisherigen Kabelrinnensysteme besteht drin, dass ein Einfädeln zweier Kabelrinnensegmente ineinander erschwert ist. Dies ist insbesondere bei breiteren Kabelrinnensegmenten in Verbindung mit hohen Montageorten der Fall.

Darüber hinaus können beim Feuerverzinken Unregelmäßigkeiten an den Rändern auftreten, so dass es passierten kann, dass einzelne Ösen und Öffnungen der Kabelrinnensegmente durch das Zinkmaterial zugesetzt werden.

Die unterschiedlichen Beschichtungen für den Korrosionsschutz werden bevorzugt auf das gleiche Grundmaterial appliziert, wobei hierfür auch dieselben Werkzeuge verwendet werden. Die zusätzliche Beschichtung führt zu einer Verdickung der Wandstärke der Kabelrinnensegmente. Dies kann dann dazu führen, dass Spalte und Hintergreifungen zu eng werden können. Dadurch können die einzelnen Kabelrinnensegmente nur erschwert montiert werden.

Aufgabe der Erfindung ist es daher, ein verbessertes Kabelrinnensystem zu schaffen, dass zumindest einen der oben genannten Nachteile überwindet. Insbesondere ist es Aufgabe der Erfindung ein einfaches, kostengünstiges und ergonomisch zu montierendes Kabelrinnensystem zu schaffen.

Die Lösung der Aufgabe erfolgt erfindungsgemäß durch ein Kabelrinnensystem mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß sind die komplementären mechanischen Verbindungselemente eingerichtet, beim Zusammenstecken zweier korrespondierender Enden der Kabelrinnensegmente in Längsrichtung der Kabelrinnensegmente und auch in Vertikalrichtung der Kabelrinnensegmente die Enden bis zum Erreichen einer Soll-Verbindungsposition bzw. -lage zueinander rückfedernd zu verbiegen und in der Soll-Verbindungsposition eine in Längs- und Vertikalrichtung sperrende Rastverbindung zu bilden. Die Montage kann dabei werkzeug- und schraublos erfolgen.

Die komplementären Verbindungselemente sind an den Kabelrinnenseitenwangen angeordnet und aus Rastelementen und korrespondierenden Gegenaufnahmen gebildet. Dabei sind zumindest zwei Rastelemente pro Kabelrinnenseitenwange an einem Ende eines Kabelrinnensegments und an dem zu verbindenden Ende des anderen Kabelrinnensegments zwei korrespondierende Gegenaufnahmen vorgesehen. Die Rastelemente sind bevorzugt in dem als Kröpfungsabschnitt ausgebildeten Verbindungsabschnitt des Kabelrinnensegments vorgesehen. Die Gegenaufnahmen sind in vorteilhafterweise als Rastlöcher in den Kabelrinnenseitenwangen ausgestaltet.

Um beim Zusammenstecken zweier korrespondierender Enden der Kabelrinnensegmente in Längsrichtung und Vertikalrichtung der Kabelrinnensegmente die Enden bis zum Erreichen einer Soll-Verbindungsposition zueinander rückfedernd zu verbiegen, weisen die Rastelemente jeweils einen rampenförmigen Teil auf**.**

Das Ende des Kabelrinnensegments mit den Gegenaufnahmen wird durch die rampenförmigen Teile über die Rastelemente drüber geführt.

Ein Vorteil der neuen Konzeption besteht darin, dass nunmehr Kabelrinnensegmente sowohl in horizontaler Richtung als auch in vertikaler Richtung zusammengesetzt werden können. Zudem wird ermöglicht, dass die Kabelrinnensegmente auch nachträglich wieder ausgetauscht werden können, während bisher ein Kabelrinnensegment zersägt werden musste, um es von den benachbarten Kabelrinnensegmenten abziehen zu können.

In einer vorteilhaften Ausgestaltung der Erfindung ist jeweils zumindest eins der Rastelemente so angeordnet, dass der rampenförmige Teil in Längsrichtung in Richtung des Endes des Kabelrinnensegments zeigt und ein anderes Rastelement einen rampenförmigen Teil aufweist, der vertikal quer zur Längsrichtung in Richtung des oberen Randes der Kabelrinnenseitenwange zeigt. Die Rastelemente sind dabei jeweils derart angeordnet, dass die rampenförmigen Teile der Rastelemente des einen Kabelrinnensegments beim Zusammenstecken der Enden zweier korrespondierender Kabelrinnensegmente zuerst mit dem Ende des anderen Kabelrinnensegments in Berührung kommen, um so das rückfedernde Verbiegen zu erreichen.

Die Anordnung und Ausrichtung der Rastelemente ermöglichen eine besonders einfache und klemmfreie Montage der Kabelrinnensegmente. Ein ungewolltes Verhaken des einen Endes des Kabelrinnensegments an einem der rastenden Teile der Rastelemente wird so vermieden.

In Bezug auf die Fertigung der Kabelrinnensegmente sowie deren Montage sind die Rastelemente in besonders vorteilhafterweise durch in den Kabelrinnensegmenten angeordnete schlaufenförmige Rastelemente gebildet. Die schlaufenförmigen Rastelemente weisen so zwei in entgegengesetzte Richtung zeigende rampenförmige Teile auf. Die Seitenflanken der Schlaufen bilden als Rastflanken den rastenden bzw. eingreifenden Teil der Rastelemente in die korrespondierenden Rastlöcher. Bevorzugt sind die schlaufenförmigen Rastelemente in das Blech eingeprägt.

Bevorzugt weisen die Rastelemente eines Kabelrinnensegments einen nächsten Abstand zum Ende des Kabelrinnensegments von 10 - 15 mm auf.

Auch können die zumindest zwei Rastelemente auf der Kabelrinnenseitenwange so angeordnet sein, dass die rampenförmigen Teile der Rastelemente zueinander angewinkelt angeordnet sind. Als vorteilhaft hat sich erwiesen, eine Anwinkelung mit einem Winkel von ± 35-55°, insbesondere ± 45°, von der Vertikalen zu wählen. Von der Kabelrinnenseite aus betrachtet können die angewinkelten Rastelemente V-förmig oder umkehrt V-förmig angeordnet sein. Die rampenförmigen Teile bewirken somit eine leichte Montage in vertikaler Richtung.

Die bevorzugt schlaufenförmig ausgebildeten Rastelemente werden dabei auf gleicher Höhe an den Kabelrinnenseitenwangen vorgesehen.

Insbesondere bei größeren Kabelrinnenbreiten können als zusätzliche Befestigungsmaßnahme zweier Kabelrinnensegmente an einem der Kabelrinnensegmente Verbindungslaschen, insbesondere Biegelaschen, an der Kabelrinnenunterseite und/oder der Kabelrinnenseitenwangen vorgesehen sein. Die Verbindungslaschen werden bei ineinandergesteckten Kabelrinnensegmenten mit Werkzeughilfe umgebogen und greifen in hierzu korrespondierend ausgebildeten Öffnungen des anderen Kabelrinnensegments ein. Somit wird ein zusätzlicher Formschluss der verbundenen Kabelrinnensegmente erreicht.

Der gekröpfte Verbindungsabschnitt am Ende des einen Kabelrinnenabschnitts kann so ausgebildet sein, dass das Ende aufgeweitet ist und ein unverkröpftes Ende des anderen Kabelrinnensegments für die bestimmungsgemäße Montage der beiden Kabelrinnensegmente in die Kröpfung einschiebbar ist.

In einer vorteilhaften Ausgestaltung ist an einem Ende eines Kabelrinnensegments auf der Kabelrinnenunterseite eine nach unten abgewinkelte Rampe vorgesehen, besonders bevorzugt an dem Ende des Kabelrinnensegments mit dem gekröpften Verbindungsabschnitt.

Auf diese Weise wird das Zusammensetzen zweier korrespondierender Kabelrinnensegmente erleichtert. Dies hat im Vergleich zu einer ebenen Unterkante der Kröpfung den Vorteil, dass bei einem Wölben bzw. Verbiegen des in die Kröpfung einzuführenden Kabelrinnensegments, trotzdem ineinander geschoben werden kann.

Bevorzugt weist das zu dem Kabelrinnensegment mit Rampe korrespondierende Ende des anderen Kabelrinnensegments horizontal quer zur Längsrichtung des Kabelrinnensegments angeordnete ein oder mehrere Rastelemente auf und das Kabelrinnensegment mit Rampe hierzu passende Rastlöcher. Die Rastelemente sind so eingerichtet, dass sie bei verbundenen Kabelrinnensegmenten eine in Längsrichtung sperrende Verbindung bilden. Insbesondere können die Rastelemente in das Blech horizontal quer zur Längsrichtung angeordnete Schlaufen sein.

Besonders bevorzugt ist die Breite der Rampe des Kabelrinnensegments so dimensioniert, dass die auf der Kabelrinnenunterseite angeordneten Rastelemente des korrespondierenden Endes des anderen Kabelrinnensegments beim bestimmungsgemäßen Zusammensetzen der beiden Kabelrinnensegmente sich innerhalb des Rampenbereichs befinden.

Um die Modularität des erfindungsgemäßen Kabelrinnensystems zu verbessern, kann das Kabelrinnensystem auch Kabelrinnensegmente mit unterschiedlich hohen Kabelrinnenseitenwangen aufweisen, wobei die unterschiedlich hohen Kabelrinnensegmente auf den Kabelrinnenseitenwange jeweils von der Kabelrinnenunterseite gleich beabstandete von den zuvor beschriebenen Rastelementen und/oder Rastlöcher aufweisen.

Auf diese Weise können somit unterschiedlich hohe Kabelrinnensegmente miteinander kombiniert werden. So kann beispielsweise ein 60 mm hohes Kabelrinnensegment mit einem 85 mm Kabelrinnensegment oder einem 110 mm hohen Kabelrinnensegment verbunden werden (verheiratet werden).

Im Übergangsbereich vom verkröpften Verbindungsbereich in den unverkröpften Teil eines Kabelrinnensegments ist jeweils zwischen Kabelrinnenseitenwange und Kabelrinnenunterseite eine Aussparung vorgesehen. Diese ist eingerichtet, durch das Zusammenschieben der Kabelrinnensegmente abgetragenes Material aufzunehmen bzw. wegzuführen.

Die Kabelrinnensegmente sind bevorzugt aus einem Blech mit einer Wandstärke von ca. 0,5 mm bis ca. 2 mm gefertigt. Die Bleche können eben sein oder Einprägungen aufweisen.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: ein Ende eines ersten Kabelrinnensegments des Kabelrinnensystems in einer perspektivischen Ansicht,
- Fig. 2: ein zum Kabelrinnensegment aus Fig. 1 korrespondierendes Ende eines zweiten Kabelrinnensegments,
- Fig. 3: einen Montagevorgang zweier Kabelrinnensegmente in Längsrichtung,
- Fig. 4: einen Montagevorgang zweier Kabelrinnensegmente in vertikaler Richtung,
- Fig. 5: einen Montagevorgang zweier Kabelrinnensegmente durch Einschwenken,
- Fig. 6: zwei verbundene Kabelrinnensegmente mit umgebogenen Befestigungslaschen in einer perspektivischen Ansicht von oben,
- Fig. 7: zwei verbundene Kabelrinnensegmente in einer perspektivischen Ansicht von unten,
- Fig. 8: ein Ende eines weiteren Kabelrinnensegments mit höheren Kabelrinnenseitenwangen,
- Fig. 9: eine Ausführungsform zweier verbundener Kabelrinnensegmente verschiedener Kabelrinnenseitenwangenhöhen,
- Fig. 10: eine weitere Ausführungsform zweier verbundener Kabelrinnensegmente verschiedener Kabelrinnenseitenwangenhöhen,
- Fig. 11: ein Ende einer weiteren Ausführungsform eines Kabelrinnensegments,
- Fig. 12: eine Ausführungsform zweier verbundener Kabelrinnensegmente mit angewinkelten Rastelementen,
- Fig. 13: eine weitere Ausführungsform zweier verbundener Kabelrinnensegmente mit angewinkelten Rastelementen, und
- Fig. 14: eine mögliche Ausführungsform eines zu dem Kabelrinnensystem kompatiblen Kabelrinnensegments.

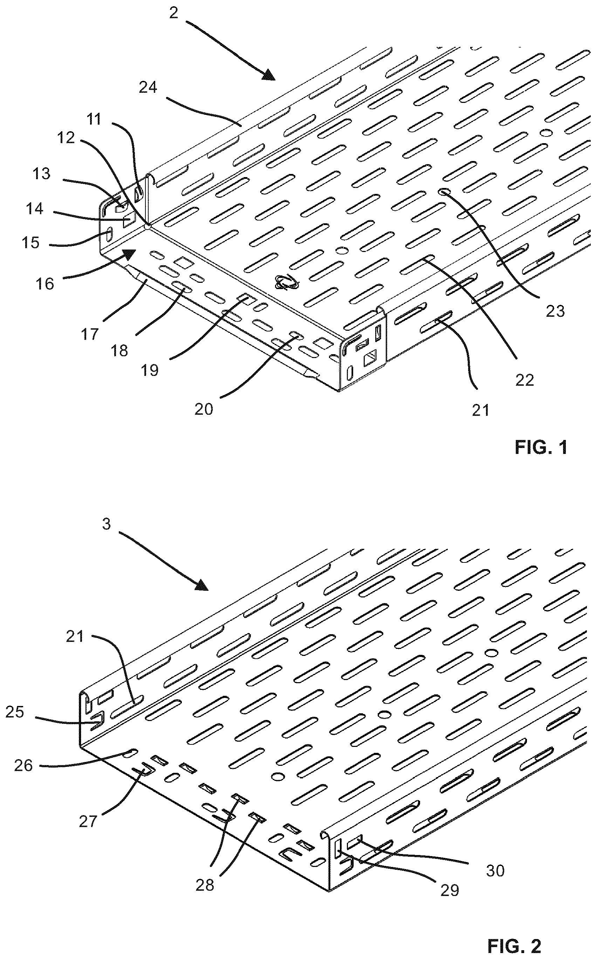

In den Figuren 1 bis 7 ist eine mögliche Ausführungsform des erfindungsgemäßen Kabelrinnensystems 1 gezeigt. Das Kabelrinnensystem 1 umfasst zwei oder mehrere Kabelrinnensegmente 2, 3, die zur Bildung eines Kabelkanals zur Aufnahme von Leitungen und Kabeln in einem Verbindungsbereich überlappend ineinander gesteckt werden.

Die Kabelrinnensegmente 2, 3 des Kabelrinnensystems 1 sind in der dargestellten Ausführungsform aus einem gebogenen Blechteil gebildet und weisen eine Kabelrinnenunterseite und zwei die Kabelrinnenunterseite seitlich begrenzende Kabelrinnenseitenwangen auf. Eine Befestigung zweier Kabelrinnensegmente 2, 3 erfolgt über einen überlappenden Verbindungsbereich durch komplementäre mechanische Verbindungselemente in Form einer Klemm- oder Rastverbindung.

Das in Figur 1 gezeigte Ende des ersten Kabelrinnensegments 2 ist in einem ersten Verbindungsbereich verkröpft. Die Kröpfung stellt sich in einem aufgeweiteten Ende des Kabelrinnensegments 2 dar. Der verkröpfte Verbindungsbereich ist ca. um die Wandstärke des Kabelrinnensegments 2 aufgeweitet, sodass ein unverkröpftes Ende eines weiteren Kabelrinnensegments 3 darin aufgenommen werden kann und ein im Wesentlichen bündiger Übergang zwischen den Kabelrinnensegmenten 2, 3 erreicht ist.

Die komplementären mechanischen Verbindungselemente sind als in das Blech eingeprägte schlaufenförmige Rastelemente 11, 13 und korrespondierende Rastlöcher 29, 30 gebildet. An den Kabelrinnenseitenwangen des in Figur 1 dargestellten Kabelrinnensegments 2 sind jeweils zwei schlaufenförmige Rastelemente 11, 13 im Kröpfungsbereich nach innen zeigend in das Blech geprägt, nämlich eine vertikalorientierte Seitenschlaufe 11 und eine horizontalorientierte Seitenschlaufe 13. Durch die schlaufenförmige Ausbildung weisen die Rastelemente 11, 13 an zwei gegenüberliegenden Seiten einen rampenförmigen Teil auf, über den ein korrespondierendes Ende eines anderen Kabelrinnensegments 3 sich rückfedernd verbiegend geschoben werden kann.

Die Seitenflanken der schlaufenförmigen Rastelemente 11, 13 bilden Rückhaltekanten aus, über die beim Eingriff in die korrespondierenden Rastlöcher 29, 30 die miteinander verbundenen Kabelrinnensegmente 2, 3 formschlüssig gehalten werden.

Die horizontalorientierte Seitenschlaufe 13 ist vom Ende des Kabelrinnensegments 2 aus betrachtet in Längsrichtung vor der vertikalorientierten Seitenschlaufe 11 positioniert. Der Abstand der horizontalorientierten Seitenschlaufen 13 zum Ende des Kabelrinnensegments beträgt dabei bevorzugt ca. 10 - 15 mm. In der dargestellten Ausführungsform sind die schlaufenförmigen Rastelemente 11, 13 in der oberen Hälfte der Kabelrinnenseitenwangen angeordnet, ungefähr im Bereich der oberen Langlochreihe.

Im unteren Bereich der jeweiligen Kabelrinnenseitenwange sind zudem eine Aussparung für eine Biegelasche 14 sowie ein vertikales Langloch vorgesehen, welches als Verschraubungsloch fungieren kann.

Auf der Kabelrinnenunterseite im Bereich der Kröpfung ist eine nach unten abgwinkelte Rampe 17 vorgesehen, die sich symmetrisch quer von der Längsachse des Kabelrinnensegments 2 bis fast an die Kabelrinnenseitenwangen erstreckt. Ferner befinden sich auf der Kabelrinnenunterseite mehrere Rastlöcher 18 für korrespondierend ausgebildete schlaufenförmige Rastelemente 28 des in die Kröpfung einzusetzenden korrespondierenden Endes eines weiteren Kabelrinnensegments 3. Diese erstrecken sich horizontal-quer zur Längsrichtung der Kabelrinnenunterseite.

Die Rampe 17 ist so breit dimensioniert, dass die Rastelemente 28 auf der Kabelrinnenunterseite des anderen Kabelrinnensegments 3 beim Zusammensetzen der Kabelrinnensegmente 2, 3 von der Rampe 17 erfasst werden. Darüber weist die Kabelrinnenunterseite zudem auch Aussparungen für Biegelaschen 19 sowie quer angeordnete Verschraubungslöcher 20 auf.

Die Figur 2 zeigt ein zum Kabelrinnensegment 2 aus Figur 1 korrespondierendes Ende eines zweiten Kabelrinnensegments 3. Das Ende ist unverkröpft und weist in einem Verbindungsabschnitt zu dem ersten Kabelrinnensegment 2 korrespondierende Rastlöcher 29, 30 und Rastelemente 28 auf.

Die zu den Rastelementen 11, 13 des ersten Kabelrinnensegments 2 korrespondierenden Rastlöcher 29, 30 sind entsprechend in der oberen Hälfte der Kabelrinnenseitenwangen angeordnet. Vom Ende des Kabelrinnensegments 3 aus gesehen, ist jeweils auf einer Kabelrinnenseitenwange ein vertikales Rastloch 29 vor einem horizontalen Rastloch 30 vorgesehen.

Die Rastlöcher 29, 30 bilden einen rechteckförmigen Grundriss, wobei die lange Seite des rechteckförmigen Querschnitts bevorzugt mehr als doppelt so lang ist, wie die kurze Seite des Rechtecks. Ferner ist der Grundriss der Rastlöcher 18, 29, 30 größer dimensioniert als der Grundriss der korrespondierenden Rastelemente 11, 13, 28, um ein problemloses Einführen ineinander zu ermöglichen.

Auf der unteren Hälfte der Kabelrinnenseitenwangen unterhalb der Rastlöcher 29, 30 ist auf jeder Kabelrinnenseitenwange eine Biegelasche 25 vorgesehen, welche in der Soll-Verbindungslage der beiden Kabelrinnensegmente 2, 3 korrespondierend zu den Aussparungen 14 in dem ersten Kabelrinnensegment 2 angeordnet sind, und entsprechend in diese Aussparungen 14 passen. Ferner erstreckt sich in der unteren Hälfte der Kabelrinnenseitenwangen jeweils ein Teil eines Langloches des perforierten Bleches in den Verbindungsabschnitt, um mit dem korrespondierenden Verschraubungsloch 15 die Kabelrinnensegmente 2, 3 zusätzlich durch eine Verschraubung zu befestigen.

Auf der Kabelrinnenunterseite sind gleichmäßig über die Breite verteilt drei Befestigungslaschen 27 sowie Verschraubungslöcher 26 vorgesehen, die ebenfalls korrespondierend den Gegenstücken des Endes des ersten Kabelrinnensegments 2 ausgebildet sind. Ferner sind an der Kabelrinnenunterseite im Verbindungsabschnitt in zwei Reihen versetzt angeordnete schlaufenförmige Rastelemente 28 vorgesehen. Diese sind vom Ende des Kabelrinnensegments 3 aus gesehen von den Biegelaschen 27 weg zeigend horizontal quer zur Längsrichtung des Kabelrinnensegments 3 angeordnet. Die Rastelemente sind nach unten zeigend in das Blech der Kabelrinnenunterseite geprägt.

Als zusätzliche Befestigungsmöglichkeit der Kabelrinnensegmente 2, 3 in der Soll-Verbindungslage sind korrespondierende Verschraubungslöcher vorgesehen. Die Verschraubungslöcher sind bevorzugt senkrecht bzw. angewinkelt zueinander angeordnet.

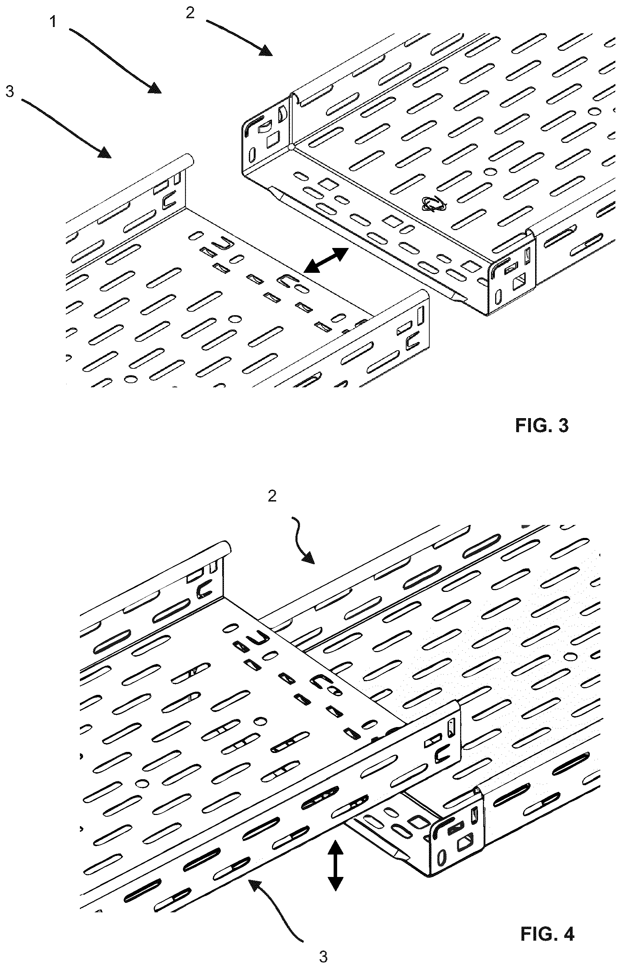

Die Figuren 3 bis 5 zeigen verschiedene Möglichkeiten, die zuvor beschriebenen Kabelrinnensegmente 2, 3 miteinander zu verbinden. Nachfolgend wird das Kabelrinnensegment mit dem Ende aus Figur 1 als erstes Kabelrinnensegment 2 und das Kabelrinnensegment mit dem Ende aus Figur 2 als zweites Kabelrinnensegment 3 bezeichnet.

Figur 3 zeigt eine horizontale Montage der Kabelrinnensegmente 2, 3. Hierfür wird das Ende des zweiten Kabelrinnensegments 3 in den Kröpfungsabschnitt des ersten Kabelrinnensegments 2 eingeführt. Die Kabelrinnenseitenwangen kommen zunächst mit den horizontalorientierten schlaufenförmigen Rastelementen 13 des ersten Kabelrinnensegments 2 in Kontakt. Durch den rampenförmigen Teil der schlaufenförmigen Rastelemente 13 werden beim weiteren Zusammenschieben die Kabelrinnenseitenwangen elastisch verbogen.

Die Anordnung der horizontalorientierten schlaufenförmigen Rastelemente 13 zu den vertikalorientierten schlaufenförmigen Rastelementen 11 sowie die Steigung und/oder Höhe der Rastelemente sind so eingerichtet, dass das Ende des zweiten Kabelrinnensegments 3 über die Rastelemente 11, 13 bis in die Soll-Verbindungslage geschoben werden kann, ohne an dem vertikalorientierten schlaufenförmigen Rastelementen zu verklemmen. In der Soll-Verbindungslage bilden die Rastelemente 11, 13 dann in Verbindung mit den Rastlöchern eine in Längs- und Vertikalrichtung sperrende Rastverbindung aus.

Die nach unten geneigte Rampe 17 im Kröpfungsbereich des ersten Kabelrinnensegments 2 ermöglicht, dass das zweite Kabelrinnensegment 3 mit den Rastelementen 28 auf der Kabelrinnenunterseite in den Kröpfungsbereich des ersten Kabelrinnensegment 2 geschoben werden kann. Sobald die Rastelemente 28 mit der Rampe 17 in Berührung kommen, werden die Kabelrinnenunterseiten der Kabelrinnensegmente 2, 3 gegeneinander elastisch verbogen, so dass das zweite Kabelrinnensegment 3 in die Soll-Verbindungslage vorgeschoben werden kann. In der Soll-Verbindungslage greifen die Rastelemente 28 in die zugehörigen Rastlöcher 18 ein und bilden eine in Längsrichtung wirkende Rastverbindung aus.

Eine vertikale Montage der beiden Kabelrinnensegmente 2, 3 ist in Figur 4 angedeutet. Hierbei wird das Ende des zweiten Kabelrinnensegments 3 von oben in den Kröpfungsbereich des ersten Kabelrinnensegments 2 eingesetzt. Dabei kommt das Ende des zweiten Kabelrinnensegments 3 zunächst mit den vertikalorientierten schlaufenförmigen Rastelementen 11 des ersten Kabelrinnenabschnitts 2 in Berührung. Hierdurch werden die Kabelrinnenseitenwangen der Kabelrinnensegmente 2, 3 zueinander elastisch verbogen, sodass das Ende des zweiten Kabelrinnensegments 3 über die Rastelemente 11, 13 bis in die Soll-Verbindungslage überführbar ist. Die Steigung und/oder Höhe und/oder Anordnung der vertikalorientierten Rastelemente 11 ist hierbei so eingerichtet, dass das zweite Kabelrinnensegment 3 ohne an den horizontalorientierten Rastelementen 13 klemmen zu bleiben, mit dem ersten Kabelrinnensegment 2 verbunden werden kann.

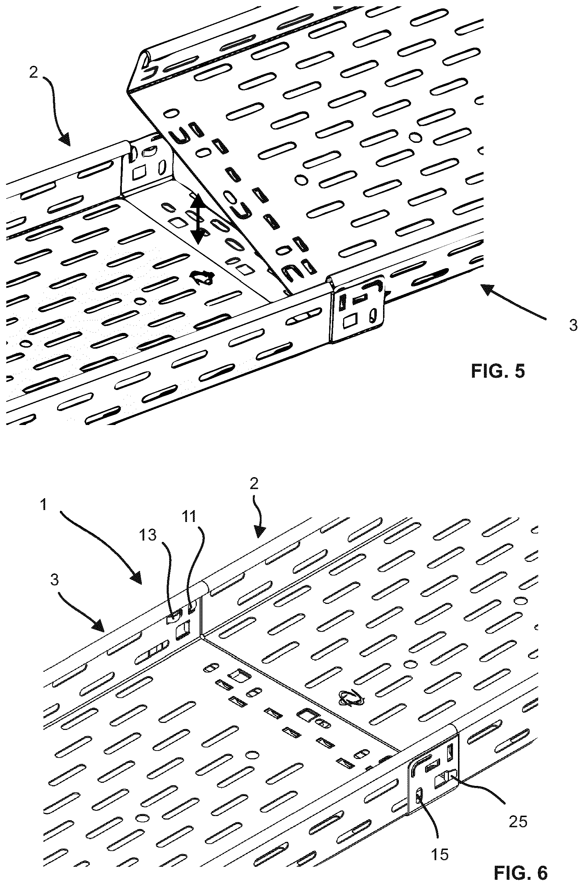

In ähnlicher Weise kann das zweite Kabelrinnensegment 3 auch in das erste Kabelrinnensegment 2 von oben geschwenkt eingesetzt werden, wie in Figur 5 angedeutet. Die vertikalorientierten schlaufenförmigen Rastelemente 11 bewirken wiederum das Aufbiegen der Kabelrinnenseitenwangen zueinander.

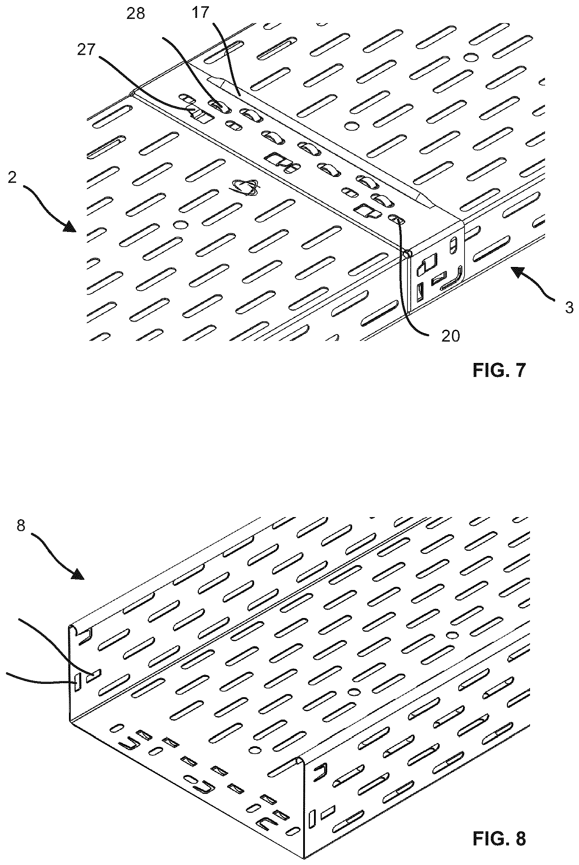

Die Figuren 6 und 7 zeigen die miteinander verbundenen Kabelrinnensegmente 2, 3 in der Soll-Verbindungslage in einer perspektivischen Ansicht von oben (Figur 6) und von schräg unten (Figur 7). Die Rastelemente 11, 13, 28 und die zugehörigen Rastlöcher 29, 30, 18 sind so zueinander positioniert, dass ein weitgehend bündiger Übergang zwischen den beiden Kabelrinnensegmenten 2, 3 erreicht ist.

Für eine zusätzliche Befestigung sind die zuvor beschriebenen Befestigungslaschen 25, 27 des zweiten Kabelrinnensegments durch die korrespondierenden Aussparungen 14, 19 sowohl auf der Kabelrinnenunterseite als auch auf den Kabelrinnenseitenwangen umgebogen. In der dargestellten Ausführungsform ist keine zusätzliche Verschraubung der Kabelrinnensegmente 2, 3 miteinander gezeigt, diese kann aber über die gekreuzt übereinander liegenden Verschraubungslöcher vorgesehen werden.

Die Figuren 7 bis 9 zeigen weitere mögliche Ausführungsformen des Kabelrinnensystems 1, bei denen erfindungsgemäße Kabelrinnensegmente mit unterschiedlich hohen Kabelrinnenseitenwandung 2, 8 miteinander verbunden werden. Die Kabelrinnensegmente 2, 8 weisen an den Kabelrinnenseitenwangen und auf den Kabelrinnenunterseiten korrespondierend zueinander ausgebildete mechanische Verbindungselemente auf, wobei die Verbindungselemente an den Kabelrinnenseitenwangen des ersten Kabelrinnensegments 2 aus horizontalorientierten und vertikalorientierten schlaufenförmige Rastelementen 11, 13 und korrespondierenden rechteckförmigen Rastlöcher 29, 30 an dem zweiten Kabelrinnensegment gebildet sind. Diese weisen jeweils von der Kabelrinnenunterseite einen gleichen Abstand auf, sodass somit auch Kabelrinnensegmente mit unterschiedlich hohen Kabelrinnenseitenwangen miteinander kombiniert werden können. In den gezeigten Ausführungsformen sind Kabelrinnensegmente der schon in den vorherigen Figuren beschriebenen Breite gezeigt, wobei auch hier die Kabelrinnenunterseiten im Verbindungsbereich zueinander passend ausgestaltete sind.

Wie dargestellt sind sowohl Ausgestaltung möglich, bei denen das höhere Kabelrinnensegment einen Kröpfungsabschnitt aufweist, in den das Ende des weniger hohen Kabelrinnensegments eingesetzt wird oder umgekehrt. Für die so vorteilhafte Kombinatorik ist es erfindungsgemäß vorgesehen, dass an den Kabelrinnenseitenwangen vorgesehene Rastelemente 11, 13 und die zugehörigen Rastlöcher 29, 30 auf dem anderen Kabelrinnensegment jeweils von der Kabelrinnenunterseite gleich beabstandet sind.

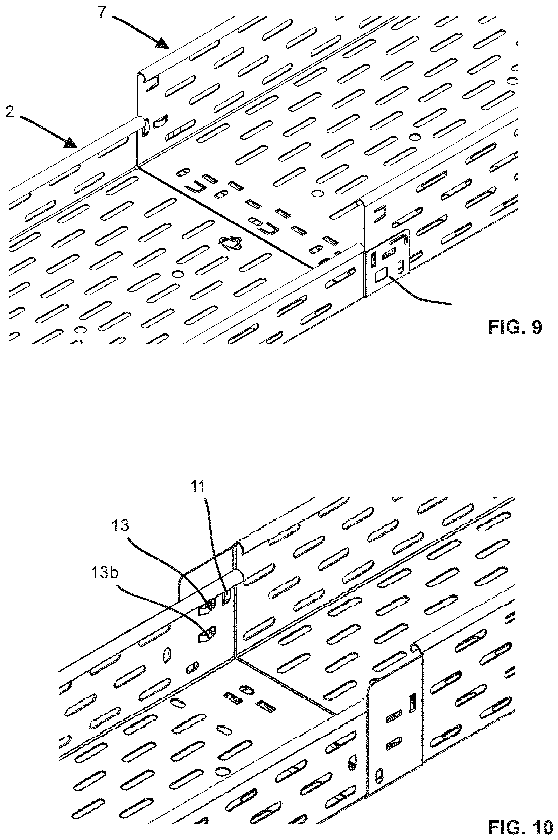

Eine weitere Ausgestaltung des Kabelrinnensystems 1 ist in der Figur 10 dargestellt. Bei höheren Kabelrinnensegmenten kann es vorteilhaft sein, nicht nur ein horizontalorientiertes schlaufenförmige Rastelement 13 vorzusehen, sondern je nach Bedarf weitere Rastelemente 13b unterhalb des obersten horizontalorientierten schlaufenförmigen Rastelements 13 anzuordnen. Die horizontalorientierten Rastelemente 13 sind hierbei bevorzugt, wie dargestellt, in gleichem Abstand zum Ende des Kabelrinnensegments untereinander positioniert. Um beim Zusammensetzen der beiden Kabelrinnensegmente bei der vertikale Montage ein Verklemmen des Endes des einen Kabelrinnensegments mit dem unteren horizontalorientierten schlaufenförmigen Rastelements 13b zu vermeiden, ist das vertikalorientierten Rastelement 11 von der Höhe und/oder Steigung derart eingerichtet, dass durch das elastische Verbiegen der Kabelrinnenseitenwangen zueinander die Flanke der unteren horizontalorientierten Schlaufe 13b überwunden ist.

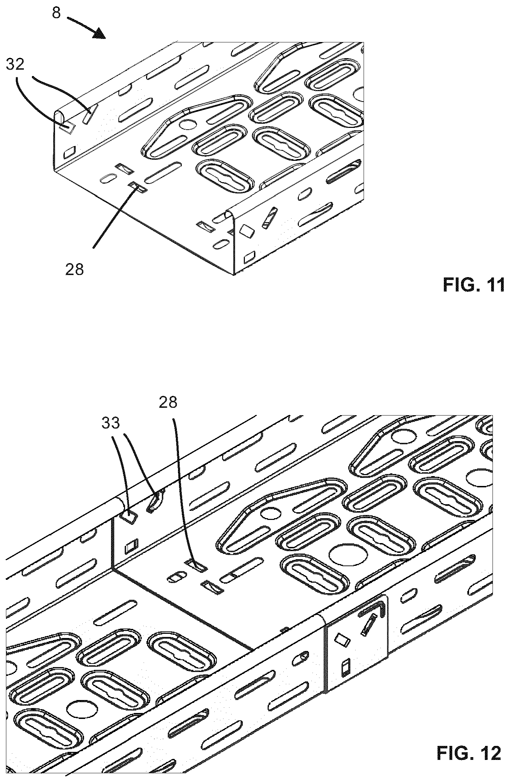

Eine weitere Ausführungsform des erfindungsgemäßen Kabelrinnensystems 1 zeigen die Figuren 11 bis 13. Die Kabelrinnensegmente sind wieder aus Blech gebogen, und weisen auf der Kabelrinnenunterseite und den Kabelrinnenseitenwangen verschiedene Lochungen und Aussparungen auf. Auf der Kabelrinnenunterseite sind Sicken vorgesehen, in denen weitere Löcher vorgesehen sind.

Ein Ende des einen Kabelrinnensegments weist wiederum eine Kröpfung auf, die ein aufgeweitetes Ende des Kabelrinnensegments bildet. In dieses Ende kann, wie dargestellt, das unverkröpfte Ende des in Figur 11 dargestellten Kabelrinnensegments eingeführt werden. Als komplementäre mechanische Verbindungselemente werden wieder an den Kabelrinnenseitenwangen angeordnete schlaufenförmige Rastelemente 33 verwendet, die in das Blech eingeprägt sind. Die Rastelemente 33 auf den Kabelrinnenseitenwangen sind zueinander V-förmig angewinkelt. Der Winkel zur Vertikalen beträgt dabei ungefähr ±45°.

Die Anwinkelung bewirkt, dass bei der vertikale Montage zweier Kabelrinnensegmente, das Kabelrinnensegment mit den korrespondierenden Rastlöchern 32 sich auf den Rastelementen 33 an zwei Stellen abstützen kann, wobei die Kabelrinnenseitenwangen aber über den rampenförmigen Teil zueinander elastisch verbogen werden. Das Ende des Kabelrinnensegments kann so mit den zugehörigen Rastlöchern 32 über die Rastelemente 33 in die Soll-Verbindungslage überführt werden.

Auch eine Montage solcher Kabelrinnensegmente in Längsrichtung ist möglich. Bei der Montage in Längsrichtung kann sich das in den Kröpfungsbereich einzusetzenden Ende im Kröpfungsbereich einerseits und an den vorderen Rastelementen abstützen. Durch die schräge Anstellung der vorderen Rastelemente werden beim Einführen wiederum Kabelrinnenseitenwangen verbogen, sodass sich die beiden Kabelrinnensegmenten besonders einfacher Art und Weise ineinander schieben lassen.

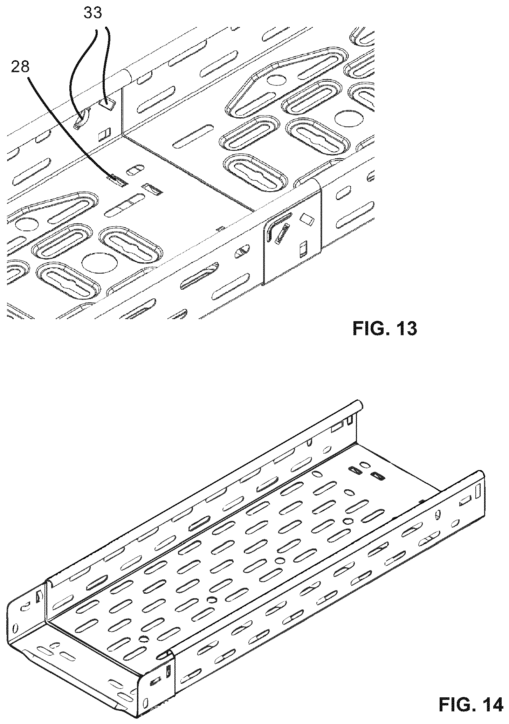

Die Figur 13 zeigt eine weitere mögliche Anordnung der Rastelemente auf den Kabelrinnenseitenwangen. Diese können ebenfalls umgekehrt V-förmig angewinkelt angebracht sein.

In Figur 14 ist eine weitere mögliche Ausführungsform eines erfindungsgemäßen Kabelrinnensegments dargestellt. Die Enden des Kabelrinnensegments sind zueinander korrespondierend ausgebildet. Diese Art der korrespondierenden Enden ist dabei selbstverständlich auch auf andere Kabelrinnensegmente übertragbar.

### Bezugszeichenliste:

- 1: Kabelrinnensystem
- 2: erstes Kabelrinnensegment
- 3: zweites Kabelrinnensegment
- 8: Kabelrinnensegment mit höheren Kabelrinnenseitenwangen
- 10: vertikale Seitenschlaufe
- 12: Zinkablaufloch
- 13: horizontale Seitenschlaufe
- 13b: zweite horizontale Seitenschlaufe
- 14: Aussparung für Biegelasche an der Seite
- 15: Verschraubungsloch
- 16: Aufgeweitetes Kabelrinnenende
- 17: Rampe
- 18: Rastloch für Bodenschlaufe
- 19: Aussparung für Biegelasche
- 20: Verschraubungsloch am Boden
- 21: optionales Verschraubungsloch an der Seite (Langloch)
- 25: Biegelasche an der Seite
- 26: Verschraubungsloch am Boden
- 27: Biegelasche am Boden
- 28: Bodenschlaufe
- 29: vertikales Rastloch für Seitenschlaufe
- 30: horizontales Rastloch für Seitenschlaufe
- 32: angewinkeltes Rastloch für angewinkelte Seitenschlaufe
- 33: angewinkelte Seitenschlaufe

## Patentansprüche

1. Kabelrinnensystem (1), umfassend zwei oder mehrere Kabelrinnensegmente (2, 3), wobei die Kabelrinnensegmente (2, 3) jeweils eine Kabelrinnenunterseite und zwei die Kabelrinnenunterseite seitlich begrenzende Kabelrinnenseitenwangen aufweisen, und wobei die Kabelrinnensegmente (2, 3) eingerichtet sind, überlappend miteinander verbunden zu werden und hierfür an einem Ende des einen Kabelrinnensegments (2) ein Verbindungsabschnitt vorgesehen ist und ein Ende eines anderen Kabelrinnensegments (3) in oder auf diesem Verbindungsabschnitt mit komplementären mechanischen Verbindungselementen durch eine Klemm- oder Rastverbindung verbindbar ist, **dadurch gekennzeichnet, dass** die komplementären mechanischen Verbindungselemente eingerichtet sind, beim Zusammenstecken zweier korrespondierender Enden der Kabelrinnensegmente (2, 3) sowohl in Längsrichtung als auch in Vertikalrichtung der Kabelrinnensegmente (2, 3) die Enden bis zum Erreichen einer Soll-Verbindungslage zueinander rückfedernd zu verbiegen und in der Soll-Verbindungslage die komplementären mechanischen Verbindungelemente eine in Längs- und Vertikalrichtung sperrende Rastverbindung bilden, wobei die komplementären Verbindungselemente an den Kabelrinnenseitenwangen angeordnet sind und aus Rastelementen (11**,** 13, 33) und korrespondierenden Gegenaufnahmen (29, 30, 32) gebildet sind, wobei zumindest zwei Rastelemente pro Kabelrinnenseitenwange an einem Ende eines Kabelrinnensegments und an dem zu verbindenden Ende des anderen Kabelrinnensegments zwei korrespondierende Gegenaufnahmen vorgesehen sind, und wobei die Rastelemente jeweils einen rampenförmigen Teil aufweisen, der beim Zusammenstecken zweier Kabelrinnensegmente (2, 3) das rückfedernde Verbiegen der Enden der Kabelrinnensegmente (2, 3) zueinander bewirkt, indem das Ende des Kabelrinnensegments (3) mit den Gegenaufnahmen (29, 30, 32) durch die rampenförmigen Teile (11, 13, 33) über die Rastelemente drüber geführt wird.

2. Kabelrinnensystem (1) nach dem vorstehenden Anspruch, **dadurch gekennzeichnet, dass** die Rastelemente in dem Verbindungsabschnitt des Kabelrinnensegments vorgesehen sind.

3. Kabelrinnensegment (1) nach dem vorstehenden Anspruch, **dadurch gekennzeichnet, dass** jeweils zumindest eins der Rastelemente so angeordnet ist, dass der rampenförmige Teil in Längsrichtung in Richtung des Endes des Kabelrinnensegments (2) zeigt und ein anderes Rastelement einen rampenförmigen Teil aufweist, der vertikal quer zur Längsrichtung in Richtung des oberen Randes der Kabelrinnenseitenwandung zeigt, wobei die Rastelemente jeweils derart angeordnet sind, dass die rampenförmigen Teile der Rastelemente bei der horizontalen und vertikalen Montage zweier Kabelrinnensegmente zunächst mit dem Ende des anderen Kabelrinnensegments (3) in Berührung kommen.

4. Kabelrinnensystem (1) nach einem der vorstehenden Ansprüche, **dadurch gekennzeichnet, dass** die Rastelemente durch in den Kabelrinnenseitenwangen angeordnete schlaufenförmige Rastelemente (11, 13) gebildet sind.

5. Kabelrinnensystem (1) nach dem vorstehenden Anspruch, **dadurch gekennzeichnet, dass** schlaufenförmigen Rastelemente (11, 13) auf gleicher Höhe und zueinander angewinkelt angeordnet sind.

6. Kabelrinnensystem (1) nach einem der vorstehenden Ansprüche, **dadurch gekennzeichnet, dass** an einem Ende eines Kabelrinnensegments (2) an der Kabelrinnenunterseite und/oder an den Kabelrinnenseitenwangen Verbindungslaschen, insbesondere Biegelaschen, vorgesehen sind, die bei ineinandergesteckten Kabelrinnensegmenten mit korrespondierend ausgebildeten Öffnungen einen zusätzlichen Formschluss der Kabelrinnensegmente bilden können.

7. Kabelrinnensystem (1) nach einem der vorstehenden Ansprüche, **dadurch gekennzeichnet, dass** der Verbindungsabschnitt des Kabelrinnensegments (2) durch einen Kröpfungsabschnitt gebildet ist, wobei der Kröpfungsabschnitt insbesondere ein aufgeweitetes Ende des Kabelrinnensegments (2) bildet, derart dass ein unverkröpftes Ende des anderen Kabelrinnensegments (3) für die bestimmungsgemäße Montage der beiden Kabelrinnensegmente (2, 3) in den Kröpfungsabschnitt einschiebbar ist.

8. Kabelrinnensystem (1) nach einem der vorstehenden Ansprüche, **dadurch gekennzeichnet, dass** am Ende des Kröpfungsabschnitts auf der Kabelrinnenunterseite eine nach unten geneigte Rampe (17) vorgesehen ist.

9. Kabelrinnensystem (1) nach dem vorstehenden Anspruch, **dadurch gekennzeichnet, dass** auf der Kabelrinnenunterseite des zu dem Kabelrinnensegment mit Rampe (17) korrespondierenden Endes des anderen Kabelrinnensystems Rastelemente vorgesehen sind und dass die Breite der Rampe (17) so auf die Quererstreckung der Rastelemente auf der Kabelrinnenunterseite abgestimmt ist, dass die Rastelemente beim Zusammenstecken der Kabelrinnensegmente sich innerhalb der Rampenbreite befinden.

10. Kabelrinnensystem (1) nach einem der vorstehenden Ansprüche, **dadurch gekennzeichnet, dass** das Kabelrinnensystem (1) Kabelrinnensegmente verschieden hoher Kabelrinnenseitenwangen umfasst und zumindest die unteren Rastelemente und korrespondierenden Gegenaufnahmen jeweils von der Kabelrinnenunterseite gleich beabstandet sind.

11. Kabelrinnensystem (1) nach einem der vorstehenden Ansprüche, **dadurch gekennzeichnet, dass** im Bereich des Übergangs vom Verbindungsabschnitt in das Kabelrinnensegment (2) jeweils zwischen Kabelrinnenunterseite und Kabelrinnenseitenwangen eine Aussparung oder Öffnung vorgesehen ist, die eingerichtet ist, durch das Zusammenschieben der Kabelrinnensegmente (2, 3) abgetragenes Material aufzunehmen bzw. wegzuschaffen.

## Claims

1. Cable tray system (1) comprising two or more cable tray segments (2, 3),
wherein the cable tray segments (2, 3) each comprise a cable tray underside and two cable tray side walls which laterally delimit the cable tray underside, and wherein the cable tray segments (2, 3) are designed to be connected to one another in an overlapping manner, and for this purpose a connecting section is provided at one end of one cable tray segment (2) and one end of another cable tray segment (3) can be connected in or on this connecting section by means of complementary mechanical connecting elements by a clamping or latching connection, **characterized in that** the complementary mechanical connecting elements are designed such that, when two corresponding ends of the cable tray segments (2, 3) are connected together, both in the longitudinal direction and in the vertical direction of the cable tray segments (2, 3) the ends are bent back by spring action relative to one another until they reach a predetermined connection position, and in the predetermined connection position the complementary mechanical connecting elements constitute a latching connection which locks in the longitudinal and vertical directions,
wherein the complementary connecting elements are arranged on the cable tray side walls and are formed by latching elements (11, 13, 33) and corresponding mating receptacles (29, 30, 32), wherein at least two latching elements are provided per cable tray side wall at one end of a cable tray segment and two corresponding mating receptacles are provided at the end of the other cable tray segment to be connected, and wherein the latching elements respectively comprise a ramp-shaped part which, when two cable tray segments (2, 3) are connected together, causes the spring-back bending of the ends of the cable tray segments (2, 3) relative to each other **in that** the end of the cable tray segment (3) with the mating receptacles (29, 30, 32) is guided over the latching elements by the ramp-shaped parts (11, 13, 33).

2. Cable tray system (1) according to the preceding claim, **characterized in that** the latching elements are provided in the connecting section of the cable tray segment.

3. Cable tray segment (1) according to the preceding claim, **characterized in that** at least one of the latching elements is arranged in such a way that the ramp-shaped part points in the longitudinal direction towards the end of the cable tray segment (2) and another latching element comprises a ramp-shaped part which points vertically transverse to the longitudinal direction in the direction of the upper edge of the cable tray side wall, wherein the latching elements are arranged respectively such that the ramp-shaped parts of the latching elements initially come into contact with the end of the other cable tray segment (3) during horizontal and vertical mounting of two cable tray segments.

4. Cable tray system (1) according to one of the preceding claims, **characterized in that** the latching elements are constituted by loop-shaped latching elements (11, 13) arranged in the cable tray side walls.

5. Cable tray system (1) according to the preceding claim, **characterized in that** loop-shaped latching elements (11, 13) are arranged at the same height and at an angle to each other.

6. Cable tray system (1) according to one of the preceding claims, **characterized in that** connecting lugs, in particular bending lugs, are provided at one end of a cable tray segment (2) on the underside of the cable tray and/or on the side walls of the cable tray, which, when the cable tray segments are inserted into one another, can form an additional positive lock of the cable tray segments with correspondingly formed openings.

7. Cable tray system (1) according to one of the preceding claims, **characterized in that** the connecting section of the cable tray segment (2) is constituted by a cranked section, wherein the cranked section in particular forms a widened end of the cable tray segment (2) in such a manner that a non-cranked end of the other cable tray segment (3) can be inserted into the cranked section for the intended assembly of the two cable tray segments (2, 3).

8. Cable tray system (1) according to one of the preceding claims, **characterized in that** a downwardly inclined ramp (17) is provided at the end of the cranked section on the underside of the cable tray.

9. Cable tray system (1) according to the preceding claim, **characterized in that** latching elements are provided on the underside of the cable tray at the end of the other cable tray segment corresponding to the cable tray segment with ramp (17), and **in that** the width of the ramp (17) is matched to the transverse extension of the latching elements on the underside of the cable tray so that the latching elements are located within the width of the ramp when the cable tray segments are connected together.

10. Cable tray system (1) according to one of the preceding claims, **characterized in that** the cable tray system (1) comprises cable tray segments with cable tray side walls of different heights and at least the lower latching elements and corresponding mating receptacles are equidistant from the underside of the cable tray, respectively.

11. Cable tray system (1) according to one of the preceding claims, **characterized in that** in the region of the transition from the connecting section into the cable tray segment (2), a recess or opening is provided between the underside of the cable tray and the side walls of the cable tray, which is designed to receive or remove material removed by pushing the cable tray segments (2, 3) together.

## Revendications

1. Système de chemins de câbles (1), comprenant deux ou plusieurs segments de chemin de câbles (2, 3), les segments de chemin de câbles (2, 3) comprenant chacun une face inférieure de chemin de câbles et deux joues latérales de chemin de câbles délimitant latéralement la face inférieure de chemin de câbles, et les segments de chemin de câbles (2, 3) étant agencés pour être reliés entre eux par chevauchement
et qu'à cet effet, une partie de liaison est prévue à une extrémité d'un segment de chemin de câbles (2) et qu'une extrémité d'un autre segment de chemin de câbles (3) peut être reliée dans ou sur cette partie de liaison à l'aide d'éléments de liaison mécaniques complémentaires par une liaison par serrage ou par encliquetage, **caractérisé en ce que**
les éléments de liaison mécaniques complémentaires sont conçus de telle sorte que, lors de l'assemblage de deux extrémités correspondantes des segments de chemin de câbles (2, 3), les extrémités fléchissent dans le sens longitudinal et dans le sens vertical des segments de chemin de câbles (2, 3) jusqu'à atteindre une position de liaison nominale et, dans la position de liaison nominale, les éléments de liaison mécaniques complémentaires forment une liaison à encliquetage bloquant dans le sens longitudinal et dans le sens vertical,
les éléments de liaison complémentaires étant disposés sur les joues latérales du chemin de câbles et formés d'éléments d'encliquetage (11, 13, 33) et de contre-réceptacles correspondants (29, 30, 32),
au moins deux éléments d'encliquetage étant prévus par joue latérale du chemin de câbles à une extrémité d'un segment de chemin de câbles et deux contre-réceptacles correspondants à l'extrémité à assembler de l'autre segment de chemin de câbles, et
les éléments d'encliquetage comprenant chacun une partie en forme de rampe qui, lors de l'assemblage de deux segments de chemin de câbles (2, 3),
provoque la flexion élastique des extrémités des segments de chemin de câbles (2, 3) l'une vers l'autre , de sorte que l'extrémité du segment de chemin de câbles (3) comprenant les contre-réceptacles (29, 30, 32) est guidée par les parties en forme de rampe (11, 13, 33) au-dessus des éléments d'encliquetage.

2. Système de chemins de câbles (1) selon la revendication précédente, **caractérisé en ce que** les éléments d'encliquetage sont prévus dans la partie de liaison du segment de chemin de câbles.

3. Segment de chemin de câbles (1) selon la revendication précédente, **caractérisé en ce qu'**au moins un des éléments d'encliquetage est disposé de telle sorte que la partie en forme de rampe est orientée dans le sens longitudinal vers l'extrémité du segment de chemin de câbles (2) et qu'un autre élément d'encliquetage comprend une partie en forme de rampe qui est orientée verticalement transversalement à la direction longitudinale en direction du bord supérieur de la joue latérale du chemin de câbles, les éléments d'encliquetage étant disposés chacun de telle sorte que les parties en forme de rampe des éléments d'encliquetage, lors du montage horizontal et vertical de deux segments de chemin de câbles, viennent d'abord en contact avec l'extrémité de l'autre segment de chemin de câbles (3).

4. Système de chemins de câbles (1) selon l'une des revendications précédentes, **caractérisé en ce que** les éléments d'encliquetage sont formés par des éléments d'encliquetage en forme de boucle (11, 13) disposés dans les joues latérales du chemin de câbles.

5. Système de chemins de câbles (1) selon la revendication précédente, **caractérisé en ce que** les éléments d'encliquetage en forme de boucle (11, 13) sont disposés à la même hauteur et inclinés l'un par rapport à l'autre.

6. Système de chemins de câbles (1) selon l'une des revendications précédentes, **caractérisé en ce qu'**à une extrémité d'un segment de chemin de câbles (2), sur la face inférieure du chemin de câbles et/ou sur les joues latérales du chemin de câbles, sont prévues des pattes de liaison, en particulier des pattes de flexion, qui, lorsque les segments de chemin de câbles sont emboîtés les uns dans les autres, peuvent former, avec des ouvertures de forme correspondante, une liaison par complémentarité de forme supplémentaire des segments de chemin de câbles.

7. Système de chemins de câbles (1) selon l'une des revendications précédentes, **caractérisé en ce que** la partie de liaison du segment de chemin de câbles (2) est formée par une partie coudée, la partie coudée formant en particulier une extrémité élargie du segment de chemin de câbles (2), de telle sorte qu'une extrémité non coudée de l'autre segment de chemin de câbles (3) peut être insérée dans la partie coudée pour le montage conforme à la destination des deux segments de chemin de câbles (2, 3) dans la partie coudée.

8. Système de chemins de câbles (1) selon l'une des revendications précédentes, **caractérisé en ce qu'**une rampe inclinée vers le bas (17) est prévue à l'extrémité de la partie coudée sur la face inférieure du chemin de câbles.

9. Système de chemins de câbles (1) selon la revendication précédente, **caractérisé en ce que** des éléments d'encliquetage sont prévus sur la face inférieure du chemin de câbles, à l'extrémité de l'autre segment de chemins de câbles correspondant au segment de chemin de câbles comprenant une rampe (17), et que la largeur de la rampe (17) est adaptée à l'étendue transversale des éléments d'encliquetage sur la face inférieure du chemin de câbles de telle sorte que les éléments d'encliquetage se trouvent à l'intérieur de la largeur de la rampe lors de l'assemblage des segments de chemin de câbles.

10. Système de chemins de câbles (1) selon l'une des revendications précédentes, **caractérisé en ce que** le système de chemins de câbles (1) comprend des segments de chemin de câbles ayant des joues latérales de différentes hauteurs et **en ce qu'**au moins les éléments d'encliquetage inférieurs et les contre-réceptacles correspondants sont espacés de manière égale de la face inférieure du chemin de câbles.

11. Système de chemins de câbles (1) selon l'une des revendications précédentes, **caractérisé en ce que,** dans la zone de transition entre la partie de liaison et le segment de chemin de câbles (2), il est prévu, entre la face inférieure du chemin de câbles et les joues latérales du chemin de câbles, un évidement ou une ouverture qui est agencé pour recevoir ou éliminer le matériau enlevé par le rapprochement des segments de chemin de câbles (2, 3).
